# EUROPEAN PATENT APPLICATION

(11) **EP 4 723 531 A1**
(43) Date of publication of application: **08.04.2026**
(21) Application number: 24838788.8
(22) Date of filing: 09.07.2024
(51) Int. Cl.: H04L 5/00, H04W 24/02

(54) **SESSION PROCESSING METHOD AND APPARATUS, AND COMMUNICATION DEVICE**

(30) Priority: 11.07.2023 CN 202310851640
(71) Applicant: ZTE CORPORATION, Shenzhen, Guangdong 518057 (CN)
(72) Inventor: CHEN, Lin, Shenzhen, Guangdong 518057 (CN); LIU, Junyi, Shenzhen, Guangdong 518057 (CN); QI, Lei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/104371
(87) International publication number: WO 2025/011536

(57) **Abstract**

Provided in the embodiments of the present application are a session processing method and apparatus, and a communication device. The method comprises: an SMF sending a session message to a UPF, wherein the session message comprises an FRER session attribute cell, the FRER session attribute cell is used for instructing the UPF to perform at least one of the following operations on messages corresponding to at least two FRER sessions: downlink replication and uplink elimination for reliability, and there is an association relationship between the at least two FRER sessions.

## Description

### CROSS-REFERENCE TO RELATED APPLICATIONS

The present application claims priority to the Chinese patent application No. 2023108516402 filed on July 11, 2023 to the China Patent Office, and entitled "SESSION PROCESSING METHOD AND APPARATUS, AND COMMUNICATION DEVICE", and the entire content of which is incorporated in the present application by reference.

### TECHNICAL FIELD

The present application relates to the technical field of communications, in particular to a session processing method and apparatus, and a communication device.

### BACKGROUND

Ultra-reliable low-latency communication (URLLC) is one of the three main application scenarios of 5G communication system. URLLC features ultra-high reliability, ultra-low latency, and extremely high availability.

In order to improve the reliability of data transmission, a dual-connection end-to-end redundancy solution is mainly adopted in the related art. However, such solution requires a frame replication and elimination for reliability (FRER) device to be deployed on a data network (DN) side, which increases the equipment cost at the DN side.

### SUMMARY

Embodiments of the present application aim to provide a session processing method, apparatus, and communication device, which can address the problem in the related art that the dual-connection end-to-end redundancy solution requires a FRER device to be deployed on a DN side, resulting in high equipment investment costs at the DN side.

To address the aforementioned technical problem, the embodiments of the present application are implemented through the following aspects.

In a first aspect, embodiments of the present application provide a session processing method, comprising: sending, by an SMF, a session message to a UPF; wherein the session message comprises an FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In a second aspect, embodiments of the present application provide a session processing method, comprising: receiving, by a UPF, a session message from an SMF; wherein the session message comprises an FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In a third aspect, embodiments of the present application provide a session processing apparatus, applied to an SMF, comprising: a sending module, configured to send a session message to a UPF; wherein the session message comprises an FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In a fourth aspect, embodiments of the present application provide a session processing apparatus, applied to a UPF, comprising: a receiving module, configured to receive a session message from an SMF; wherein the session message comprises an FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In a fifth aspect, embodiments of the present application provide a communication device, comprising: a memory, a processor, and computer-executable instructions stored on the memory and executable by the processor, wherein the computer-executable instructions, when executed by the processor, cause the processor to perform the steps of the method according to the first aspect or the second aspect.

In a sixth aspect, embodiments of the present application provide a computer-readable storage medium, having computer-executable instructions stored thereon, wherein the computer-executable instructions, when executed by a processor, cause the processor to perform the steps of the method according to the first aspect or the second aspect.

### BRIEF DESCRIPTION OF DRAWING(S)

For a clearer illustration of the technical solutions in the embodiments of the present application or the prior art, the following will briefly introduce the accompanying drawings required for the description of the embodiments or the prior art. Obviously, the accompanying drawings described below merely represent some embodiments recorded in the present application. For those skilled in the art, other drawings can also be obtained from these accompanying drawings without involving any inventive effort.
FIG. 1 illustrates a schematic flowchart of a session processing method according to embodiments of the present application.
FIG. 2 is a schematic diagram of an application environment networking architecture according to embodiments of the present application.
FIG. 3 is a schematic diagram of a system architecture according to embodiments of the present application.
FIG. 4 illustrates a schematic flowchart of a session processing method according to embodiments of the present application.
FIG. 5 is a schematic diagram of an embodiment of implementing a FRER function under a single SMF.
FIG. 6 is a schematic diagram of an embodiment of implementing a FRER function under multiple SMFs.
FIG. 7 illustrates an embodiment of deciding a primary-secondary session using a dynamic negotiation method.
FIG. 8 is a schematic diagram of an embodiment of performing uplink packet elimination by a UPF.
FIG. 9 is a schematic diagram of an embodiment of performing downlink packet replication by a UPF.
FIG. 10 illustrates a schematic structural diagram of a session processing apparatus according to embodiments of the present application.
FIG. 11 illustrates a schematic structural diagram of a session processing apparatus according to embodiments of the present application.
FIG. 12 is a schematic diagram of a hardware structure of a communication device that executes a session processing method according to embodiments of the present application.

### DETAILED DESCRIPTION

To enable those skilled in the art to better understand the technical solutions in the present application, the technical solutions in the embodiments of the present application will be described clearly and completely below in conjunction with the accompanying drawings in the embodiments of the present application. Obviously, the described embodiments are only a part of the embodiments of the present application, rather than all of them. All other embodiments obtained by those skilled in the art based on the embodiments of the present application without involving any inventive effort shall fall within the scope of the present application.

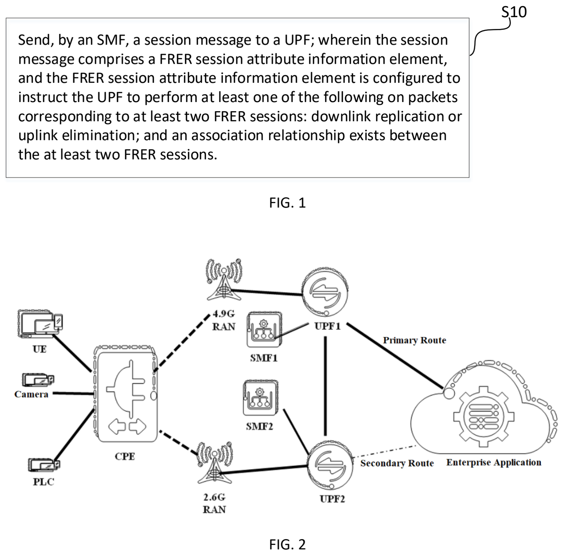

FIG. 1 illustrates a schematic flowchart of a session processing method according to embodiments of the present application. The method may be executed by a Session Management Function (SMF), in other words, the method may be executed by software or hardware installed in the SMF. As shown in FIG. 1, the method may comprise the following steps.

At S10: The SMF sends a session message to a User Plane Function (UPF); wherein the session message comprises a FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In one embodiment, the session message may be a session establishment request message (N4 Session Establishment Request). That is, when sending the session establishment request message to the UPF, the SMF adds the FRER session attribute information element to instruct the UPF to perform processing such as downlink replication or uplink elimination on packets.

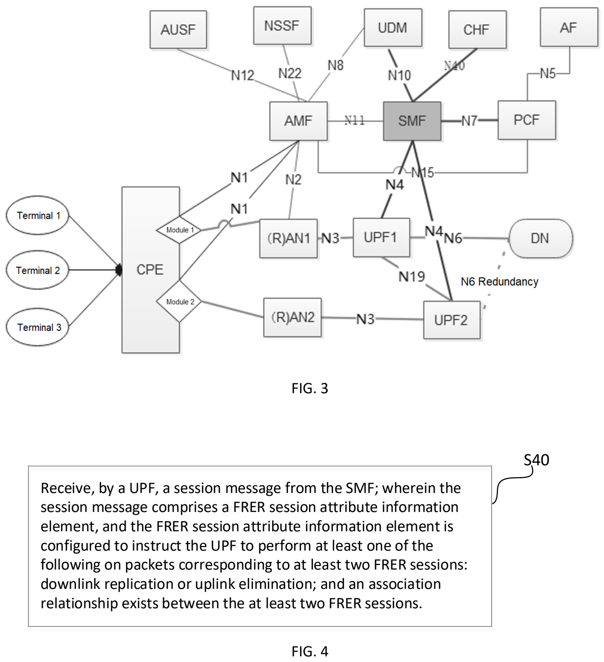

An application environment networking architecture of embodiments of the present application is shown in FIG. 2, and a system architecture is shown in FIG. 3. A customer premise equipment (CPE) initiates establishment of two FRER sessions through two modules, respectively. The CPE may be a wireless router with a 5G module. The SMF may, according to configurations from a Unified Data Management (UDM) or a Policy Control Function (PCF), identify the two FRER sessions as multiple sessions under the same CPE, or in other words, identify that an association relationship exists between the two FRER sessions. Subsequently, the SMF delivers an instruction to the UPF, instructing the UPF to perform processing such as downlink replication or uplink elimination on packets corresponding to the two FRER sessions.

It should be noted that the embodiments of the present application are described using two associated FRER sessions as an example. In practice, the number of associated FRER sessions under the same CPE can be greater, for example, three, four, and so on.

In one embodiment, the embodiment shown in FIG. 1 may further comprise the following steps: the SMF determines the association relationship between the at least two FRER sessions; wherein the at least two FRER sessions are established by at least two modules of the same CPE respectively, for example, each module establishes one FRER session; and the at least two FRER sessions belong to the same terminal. The terminal may be a UE, or a camera, a Programmable Logic Controller (PLC), or the like as shown in FIG. 2. According to the embodiment, an FRER redundant session can be identified, associated and processed on a core network side, No corresponding FRER equipment needs to be deployed on a DN side, enabling direct interworking with enterprise application servers and reducing equipment investment on enterprise application side.

In one embodiment, at least two modules of the CPE respectively access access network devices operating on different frequency bands or employing different access modes respectively. As shown in the example of FIG. 2, two modules of the CPE access assess network devices operating on different frequency bands, respectively 4.9G RAN and 2.6G RAN, further enhancing reliability on a radio side.

The session processing method provided in the embodiments of the present application enables the SMF to instruct the UPF regarding associated FRER sessions, and the UPF to perform downlink replication or uplink elimination on packets corresponding to the associated FRER sessions. By performing the identification, association, and processing of FRER sessions on the core network side, the investment in new devices on the DN side is reduced, enabling rapid provision of highly reliable communication under the existing network architecture.

Furthermore, the dual-connection end-to-end redundancy solution in the related art requires terminal upgrades to support coordinated processing of dual sessions, which significantly increases equipment investment costs and fails to leverage the existing massive number of legacy terminals. This embodiment introduces the CPE device on a radio access network side, which aggregates access from various terminals, thereby substantially reducing functional requirements on both the terminals and the radio access network (RAN) and enabling rapid provision of highly reliable communication under the existing network architecture.

The session processing method provided in the embodiments of the present application can be applied in coordinated above-ground and underground operations in the coal mining industry to achieve network backup transmission for emergency rescue during mining accidents. It can also be applied in scenarios requiring reliable transmission for electric power differential protection services. The method enables the provision of customized 5G industry local area networks for partners, leveraging existing enterprise networks and terminals.

In any of the above embodiments, determining, by the SMF, the association relationship between the at least two FRER sessions comprises at least one of the following methods 1) to 4):
1) The SMF acquires an Access and Mobility Subscription Data when acquiring a session subscription data from a Unified Data Management (UDM), wherein the Access and Mobility Subscription Data comprises the association relationship between the at least two FRER sessions.

In this example, multiple modules belonging to the same CPE are associated during user subscription via a Correlation Mobile Station Integrated Services Digital Network (cMsisdn) number information element of the Access and Mobility Subscription Data. When acquiring the session subscription data, the SMF simultaneously acquires the Access and Mobility Subscription Data to identify and associate FRER users. In this example, a BOSS service desk can be configured on the UDM to subscribe FRER user information.

2) The SMF acquires a Session Management Subscription Data from the UDM, the Session Management Subscription Data comprises a first information element (e.g., a CorrelationFrerlD information element), and the first information element comprises the association relationship between the at least two FRER sessions.

In this example, the UDM can associate the FRER sessions by adding the CorrelationFrerlD information element to the Session Management Subscription Data, which avoids the SMF having to call an access interface of the UDM one more time, thereby improving performance.

After acquiring subscription information, the SMF can locate a redundant FRER session locally or within an SMF set based on the CorrelationFrerlD.

3) The SMF acquires a session association subscription data from the UDM, wherein the session association subscription data comprises an internal group identifier information, and the internal group identifier information comprises the association relationship between the at least two FRER sessions.

In this example, the UDM can add at least two modules under the same CPE to the same internal group, and then deliver internal group identifiers (internalGrouplds) in an existing session association subscription data to the SMF.

After acquiring subscription information, the SMF can locate the redundant FRER sessions locally or within an SMF set based on the internalGrouplds.

4) The SMF acquires Subscription Permanent Identifiers (SUPIs) of the at least two modules from a Policy Control Function (PCF), and determines the association relationship between the at least two FRER sessions based on the subscription permanent identifiers of the at least two modules.

The FRER session attribute information element mentioned in any of the above embodiments may comprise at least one of the following:
1) A FrerID, wherein the FrerID is configured to indicate an index of the FRER session. The FrerlD may be an RSN, a FRER group identifier (ID), a Subscription Permanent Identifier (SUPI) of a partner session, or a Generic Public Subscription Identifier (GPSI) number; wherein the associated at least two FRER sessions are partner sessions to each other.
2) A Redundancy Sequence Number (RSN), wherein the RSN is configured to indicate a sequence number of the redundant FRER session.

In any of the above embodiments, the UPF may be a primary UPF, and the FRER session attribute information element may further comprise: N19 tunnel information between the primary UPF and a peer secondary UPF; wherein the primary UPF interworks with the DN side.

To further enhance reliability on the core network side, multiple SMFs serve a same enterprise network in a load-sharing manner. In this case, an N19 tunnel needs to be established in advance, and the SMFs register and retrieve relevant session information via the UDM or a Binding Support Function (BSF). This embodiment comprises the following step: the SMF registers and retrieves information of the at least two FRER sessions through the UDM or the BSF; wherein at least two SMFs serve the same DN in a load-sharing manner. Distributing the load across different SMFs further increases reliability on the core network side.

In one embodiment, the method further comprises that: the SMF initiates a session update request to a peer SMF, wherein the session update request is configured to negotiate establishment of an N19 tunnel between the primary UPF and the secondary UPF. For details, reference may be made to steps 109a and 109b in Embodiment 2 described later.

Any of the above embodiments further comprises the following step: the SMF sends an identifier of the redundant FRER session to a Charging Function (CHF) via an N40 charging interface, to enable the CHF to determine a charging policy. For example, the SMF adds a FRER redundant session identifier in the N40 charging interface to the CHF, facilitating customization of a personalized charging policy.

The session processing method according to the embodiments of the present application has been described in detail above with reference to FIGs. 1 to 3. A session processing method according to another embodiment of the present application will be described in detail below with reference to FIG. 4. It can be understood that the interaction between the UPF and the SMF described from the perspective of the UPF is the same as or corresponds to the description from the SMF side in the method shown in FIG. 1. To avoid repetition, the relevant description is appropriately omitted.

FIG. 4 is a schematic flowchart illustrating implementation of a session processing method according to embodiments of the present application, which may be applied on the UPF side. As shown in FIG. 4, the method 400 comprises the following steps.

At S40: The UPF receives a session message from the SMF; wherein the session message comprises a FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In the embodiment of the present application, the UPF determines the associated FRER sessions based on the instruction from the SMF, and the UPF may also perform downlink replication or uplink elimination on packets corresponding to the associated FRER sessions. By performing identification, association, and processing of FRER sessions on the core network side, the investment in new devices on the DN side is reduced, enabling the rapid provision of highly reliable communication under the existing network architecture.

In one embodiment, the method further comprises: the UPF receives an uplink packet corresponding to the FRER session; and if it is queried that the uplink packet has been forwarded previously, the uplink packet is discarded; or if it is queried that the uplink packet has not been forwarded previously, whether the UPF is a primary UPF is determined, and the uplink packet is forwarded to the primary UPF through an N19 tunnel if the UPF is a secondary UPF, or, the uplink packet is forwarded to the DN side if the UPF is the primary UPF.

In one embodiment, the UPF is a primary UPF, and the method further comprises: the UPF receives a downlink packet corresponding to the FRER session; and upon determining that downlink replication is required, downlink replication is executed, a replicated downlink packet is forwarded to a secondary UPF via an N19 interface; or upon determining that downlink replication is not required, the downlink packet is forwarded to the FRER session for transmission.

In one embodiment, the UPF is a primary UPF, and the FRER session attribute information element further comprises: N19 tunnel information between the primary UPF and a peer secondary UPF; wherein the primary UPF interworks with the DN side.

In one embodiment, after learning a binding relationship (or association relationship) of the at least two FRER sessions, the UPF needs to determine a primary UPF. The primary UPF is responsible for performing uplink replication or downlink elimination on packets and for interworking with the DN side.

A primary-secondary relationship between the primary UPF and the secondary UPF is determined based on at least one of the following:
1) A pre-configured static manner, for example, configuring UPF1 as the primary UPF and UPF2 as the secondary UPF, and the primary UPF maintains the packet sequence number (SN).
2) A decision made and indicated by the SMF.
3) Establishment time of the FRER sessions, wherein a UPF corresponding to the FRER session established earlier serves as the primary UPF, and a UPF corresponding to the FRER session established later serves as the secondary UPF.
4) A dynamic decision negotiated between the primary UPF and the secondary UPF via an N19 tunnel.

To illustrate the session processing method provided in the embodiments of the present application in detail, the following will be described in conjunction with several specific embodiments.

### Embodiment 1

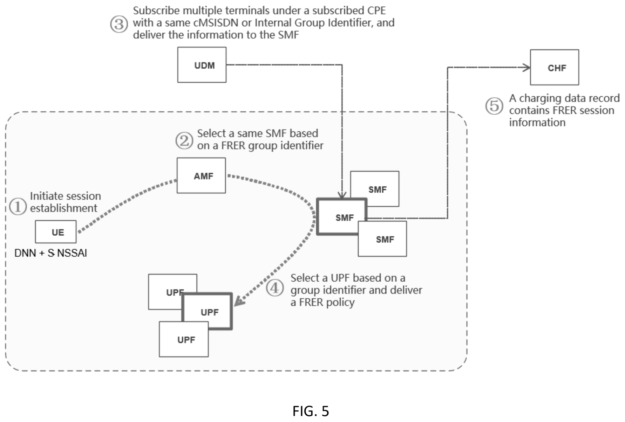

As shown in FIG. 5, this embodiment is a schematic diagram of implementing a FRER function under a single SMF, comprising the following steps:
At Step 101: a terminal (UE) initiates session establishment through a CPE, which may carry information such as: TAI, SUPI (the SUPIs for primary and secondary sessions are different), DNN, Slice, and PDU session type (Ethernet/IP), etc.

At Step 102: an Access and Mobility Management Function (AMF) acquires user subscription information from the UDM, and selects an SMF for access based on information such as DNN and a network slice.

Optionally, the AMF may also select an appropriate SMF for access based on a FRER group information, and the FRER group information needs to be registered in a Network Repository Function (NRF) by the SMF in advance.

At Step 103: the SMF acquires session subscription information from the UDM, and determines that the session is an FRER module session based on the internalGroupld information.

Optionally, the SMF may also locally and statically configure a FRER user binding relationship, and open an OAM interface to a third party, or make it accessible to customers through an operator network management center, facilitating operation and maintenance management.

At Step 104: the SMF locally queries information of the associated FRER module session, attempts to select different UPFs for session access as much as possible, and delivers an FRER session attribute information element to the UPF, as shown in the table below.

| Information Element Name | Optionality | Description |
|---|---|---|
| FrerID | Optional | Indicates an index of the FRER session |
| RSN | Optional | Indicates the redundancy sequence number |

The encoding format is shown in the table below:

| | Bits | | | | | | | |
|---|---|---|---|---|---|---|---|---|
| Octets | 8 | 7 | 6 | 5 | 4 | 3 | 2 | 1 |
| 1 to 2 | Type = 32768+445(decimal) | | | | | | | |
| 3 to 4 | Length = n | | | | | | | |
| 5 to 6 | Enterprise ID = Enterprise A | | | | | | | |
| 7+22 | FrerID | | | | | | | |

At Step 105: The SMF adds a frerGroupIdentifier to charging data records sent to a CHF, identifying information of the primary and secondary sessions, to facilitate personalized charging policy control by the CHF.

| Attribute Name | Data Type | P | Cardinality | Description |
|---|---|---|---|---|
| internalGroupIdentifier | GroupId | M | 0..1 | Identifier of the 5G LAN VN group. |
| frerGroupIdentifier | GroupId | OC | 0..1 | Identifier of the FRER Group. |

### Embodiment 2

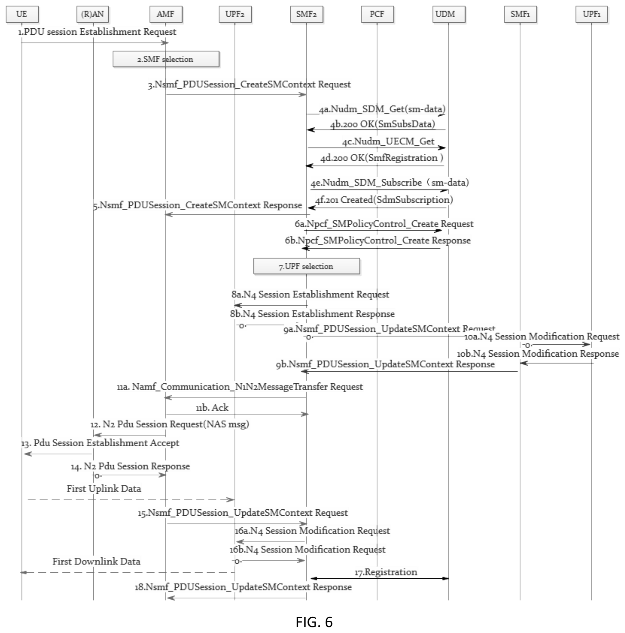

As shown in FIG. 6, this embodiment is a complete example of implementing a FRER function under multiple SMFs. Different from Embodiment 1, the two FRER sessions may be accessed to two different SMFs. A first module session has already been accessed to SMF1/UPF1 according to Embodiment 1, and its session information has been registered in the UDM. The process for accessing a second module FRER now begins. This embodiment comprises the following steps:
At Step 101: an FRER user (CPE) initiates a PDU session establishment request for the second session, carrying: TAI, SUPI (the SUPIs for primary and secondary sessions are different), DNN, Slice, and PDU session type (Ethernet/IP).

At Step 102: an AMF selects an appropriate SMF2 for processing based on a network slice, DNN, and location.

At Step 103: the AMF initiates a PDU session establishment request to SMF2, sending an Nsmf_PDUSession_CreateSMContext Request message to the SMF, carrying information such as DNN and Slice, etc.

At Step 104a: the SMF2 sends a Nudm_SDM(SubscriberDataManagement)_Get (sm-data) request to the UDM to acquire user subscription information.

At Step 104b: the UDM returns session subscription information, as shown in the table below:

| Attribute Name | Data Type | P | Cardinality | Description |
|---|---|---|---|---|
| CorrelationFrerID | VarUeId | 0 | 0..1 | SUPI (Subscription Permanent Identifier) or GPSI (Generic Public Subscription Identifier) number of the associated module |

At Step 104c: the SMF2, having failed to locate the information of the first FRER module session locally, sends an Nudm_UECM_Get (UEContextManagement) to the UDM, in which a ueld is the CorrelationFrerlD of the associated module and carries a SupportedFeatures=FRER indication.

At Step 104d: the UDM returns resource information of the first session, and may optionally also directly return N19 forwarding tunnel information, as shown in the table below:

| Attribute Name | Data Type | | Cardinality | Description |
|---|---|---|---|---|
| smContextRef | Uri | O | 0..1 | Module session resource |
| n19ForwardingTunnel | TunnelInfo | O | 0..1 | FRER module forwarding tunnel |

At Step 104e: the SMF2 sends an Nudm_SDM_Subscribe (sm-data) to the UDM to subscribe a subscription change notification.

At Step 104f: the UDM returns 201 Created (SdmSubscription), indicating a subscription result.

At Step 105: SMF2 sends an Nsmf_PDUSession_CreateSMContext Response message to the AMF, confirming successful establishment of the SM context.

At Step 106: SMF2 selects a PCF and initiates an SM policy control establishment request to the PCF, and the PCF returns a response carrying FRER information.

At Step 107: based on the FRER user information, the SMF2 queries and obtains primary session information, and attempts to select different UPFs for access as much as possible, thereby ensuring link reliability.

At Step 108a: the SMF2 sends an N4 Session Establishment Request message to the UPF2 to establish a UE side session, carrying session type, PDR, FAR, and FRER attributes.

Optionally, if the UDM returns the N19 tunnel information of the first session in step 104d, this information may also be directly carried to UPF2.

At Step 108b: upon receiving the N4 session establishment request from the SMF2, the UPF2 records the FRER session attributes, creates an N19 tunnel, and returns an N4 Session Establishment Response to SMF2.

Optionally, the UPF2 may also send packets to UPF1 through the N19 tunnel to perform self-negotiation of FRER features. The process then proceeds directly to step 110.

At Step 109a: the SMF2 sends an Nsmf_PDUSession_Update SMContext Request to SMF1 as a session update indication, carrying the newly created N19 tunnel information.

At Step 110a: SMF1 sends a PFCP Session Modification Request message to UPF1, carrying the peer N19 tunnel information.

At Step 110b: the UPF returns a successful update response.

At Step 109b: the SMF1 returns a context update response to the SMF2.

Optionally, if a session registration information at the UDM does not contain the N19 tunnel information, or if the tunnel information changes, the updated N19 tunnel information may also be carried back.

At Step 110: the SMF sends a Namf_Communication_N1N2MessageTransfer Request to the AMF, carrying N2 SM information which includes an N3 uplink TEID allocated by the UPF. This is used to notify a (R)AN side to update the uplink peer tunnel information of the N3 tunnel to the UPF.

Optionally, the N2 message may also carry a Redundant PDU Session Information IE, comprising: redundant session information, including a PDU Session Pair ID and a self-generated RSN, to facilitate redundant session uplink control by the RAN.

At Step 111: the AMF sends a response message to the SMF.

At Step 112: the AMF sends a PDU Session Resource Setup Request to the (R)AN, where the request contains the N3 uplink tunnel information.

At Step 113: the (R)AN initiates RRC reconfiguration and forwards a PDU session establishment accept message to the UE.

At Step 114: the (R)AN sends a PDU Session Resource Setup Response message to the AMF, carrying information such as an N3 downlink tunnel information (AN Tunnel Info) allocated to the UPF.

At Step 115: the AMF sends an Nsmf_PDUSession_UpdateSMContext Request to the SMF, carrying an N2 session establishment response.

At Step 116: the SMF sends a PFCP Session Modification Request to the UPF to deliver the N3 downlink tunnel information from the (R)AN side to the UPF. The UPF replies with a PFCP Session Modification Response message to the SMF, and the UPF returns a response.

At Step 117: the SMF initiates session registration with the UDM, carrying the session resource URI and FRER session attributes, such as the N19 tunnel information.

At Step 118: the SMF returns an Nsmf_PDUSession_UpdateSMContext Response to the AMF.

### Embodiment 3

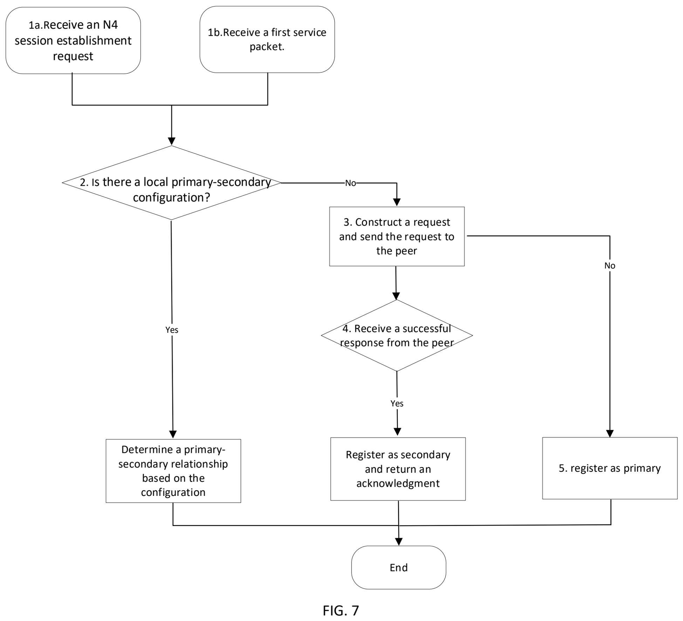

As shown in FIG. 7, this embodiment is an example of determining a primary-secondary session using a dynamic negotiation method, comprising the following steps:

At Step 101: a UPF receives an N4 session establishment request from an SMF, and a primary-secondary relationship for the session is not indicated.

Optionally, determination of the primary-secondary relationship may also be deferred until a packet from a terminal or a network side is received.

At Step 102: the UPF reads a primary-secondary relationship according to a local configuration. If the primary-secondary relationship is read, it is used directly.

At Step 103: if no primary-secondary relationship is read, the UPF constructs a request packet carrying a secondary indication, a timestamp and a sequence number, and sends it to the peer UPF through an N19 tunnel.

At Step 104: the UPF receives a response from a peer UPF. Based on a success code carried in the message, it sets the local session to a secondary state, returns an Ack confirmation to the peer UPF, and completes a three-way handshake.

At Step 105: if the UPF does not receive a response or the response carries a failure code, it will act as the primary locally and returns an Ack confirmation.

### Embodiment 4

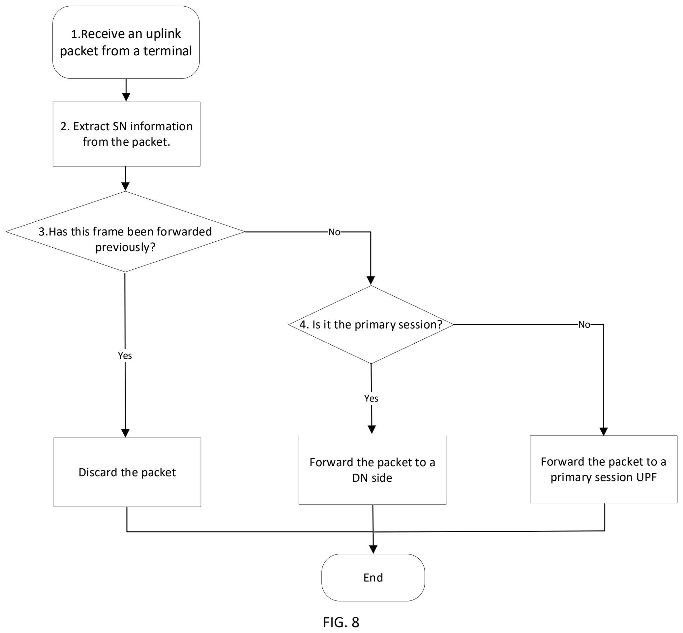

As shown in FIG. 8, this embodiment is an example of performing uplink packet elimination by a UPF, comprising the following steps:

At Step 101: the UPF receives an uplink packet from a terminal side.

At Step 102: the UPF extracts information such as destmac, srcmac, vlanid, and SN from the uplink packet.

At Step 103: if it is queried that a frame has been forwarded previously, the packet is discarded.

At Step 104: whether the current UPF is a primary UPF is determined. If the current UPF is a primary UPF, the packet is forwarded to the DN side.

At Step 105: if the current UPF is not a primary UPF, the packet is forwarded to the primary UPF through an N19 tunnel, and then repeat the processing from step 101 on the primary UPF.

### Embodiment 5

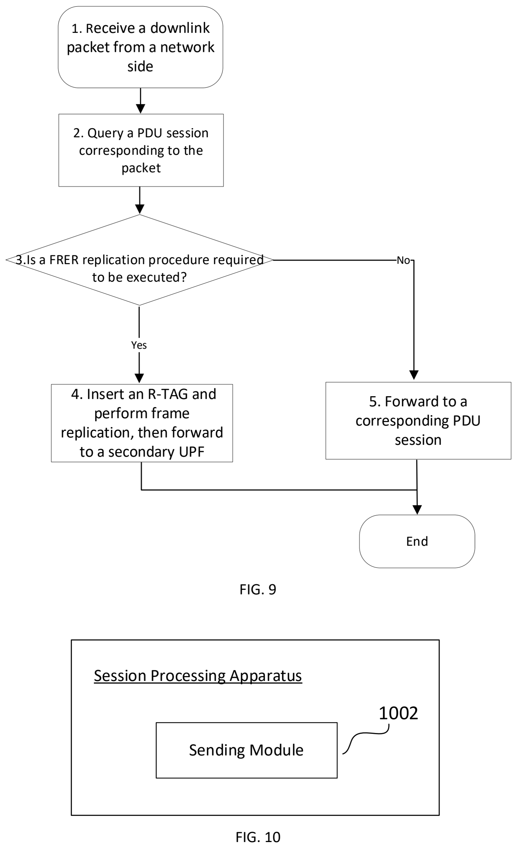

As shown in FIG. 9, this embodiment is an example of performing downlink packet replication by a UPF, comprising the following steps:

At Step 101: the UPF receives a downlink packet from a network side.

At Step 102: the UPF queries a PDU session corresponding to the packet.

At Step 103: the UPF extracts destmac, srcmac, or vlanid from the downlink packet and queries whether an FRER replication procedure needs to be executed.

At Step 104: if it is queried that the replication is required, an R-TAG is inserted, frame replication is performed, then the replicated frame is forwarded to a secondary UPF via an N19 interface, and the SN is updated.

At Step 105: if it is queried that the replication is not required, no replication needs to be performed, and the corresponding frame is simply forwarded to a corresponding PDU session.

FIG. 10 illustrates a schematic structural diagram of a session processing apparatus provided by embodiments of the present application. The apparatus may be applied to an SMF and comprises the following modules.

A sending module 1002 is configured to send a session message to a UPF; wherein the session message comprises a FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In the embodiment of the present application, the SMF instructs the UPF regarding associated FRER sessions, and the UPF performs downlink replication or uplink elimination on packets corresponding to the associated FRER sessions. By performing identification, association, and processing of FRER sessions on a core network side, the investment in new equipment on a DN side is reduced, enabling the rapid provision of highly reliable communication under the existing network architecture.

In one embodiment, the apparatus further comprises a determination module, configured to determine the association relationship between the at least two FRER sessions; wherein the at least two FRER sessions are established by at least two modules of the same CPE respectively; and the at least two FRER sessions belong to a same terminal.

In one embodiment, the determination module is configured to perform at least one of the following:
1) acquiring an access and mobility subscription data when acquiring a session subscription data from a UDM, wherein the access and mobility subscription data comprises the association relationship between the at least two FRER sessions.
2) acquiring a session management subscription data from the UDM, wherein the session management subscription data comprises a first information element, and the first information element comprises the association relationship between the at least two FRER sessions.
3) acquiring a session association subscription data from the UDM, wherein the session association subscription data comprises an internal group identifier information, and the internal group identifier information comprises the association relationship between the at least two FRER sessions.
4) acquiring subscription permanent identifiers of the at least two modules from a PCF, and determining the association relationship between the at least two FRER sessions based on the subscription permanent identifiers of the at least two modules.

In one embodiment, each of the at least two modules access access network devices operating on different frequency bands or employing different access modes respectively.

In one embodiment, the FRER session attribute information element comprises at least one of the following: 1) a FrerID, wherein the FrerID is configured to indicate an index of the FRER session; 2) a redundancy sequence number RSN, wherein the RSN is configured to indicate a sequence number of a redundant FRER session.

In one embodiment, the UPF is a primary UPF, and the FRER session attribute information element further comprises: N19 tunnel information between the primary UPF and a peer secondary UPF; wherein the primary UPF interworks with the DN side.

In one embodiment, the apparatus further comprises a registration and retrieval module, configured to register and retrieve information of the at least two FRER sessions via the UDM or a BSF; wherein at least two SMFs serve the same DN in a load-sharing manner.

In one embodiment, the sending module 1002 is further configured to initiate a session update request to a peer SMF, wherein the session update request is configured to negotiate establishment of an N19 tunnel between the primary UPF and the secondary UPF.

In one embodiment, the sending module 1002 is further configured to send an identifier of the redundant FRER session to a CHF via an N40 charging interface, to enable the CHF to determine a charging policy.

The apparatus provided in the embodiment of the present application can execute the methods described in the foregoing method embodiments and achieve the functions and beneficial effects of the methods described in the foregoing method embodiments, which will not be reiterated here.

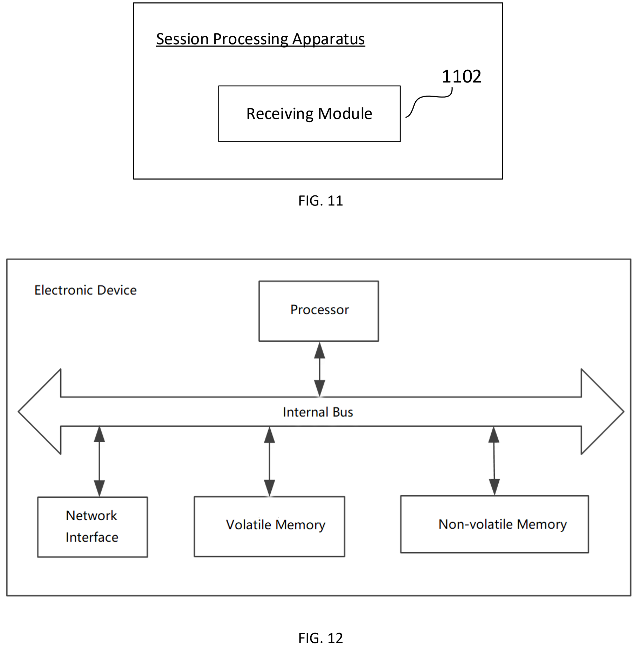

FIG. 11 illustrates a schematic structural diagram of a session processing apparatus provided by embodiments of the present application. The apparatus may be applied to a UPF and comprises the following modules.

A receiving module 1102 is configured to receive a session message from an SMF; wherein the session message comprises a FRER session attribute information element, and the FRER session attribute information element is configured to instruct the UPF to perform at least one of the following on packets corresponding to at least two FRER sessions: downlink replication or uplink elimination; and an association relationship exists between the at least two FRER sessions.

In the embodiment of the present application, the UPF determines the associated FRER sessions based on the instruction from the SMF, and the UPF may also perform downlink replication or uplink elimination on packets corresponding to the associated FRER sessions. By performing identification, association, and processing of FRER sessions on a core network side, the investment in new equipment on a DN side is reduced, enabling the rapid provision of highly reliable communication under the existing network architecture.

In one embodiment, the receiving module 1102 is further configured to receive an uplink packet corresponding to the FRER session; and if it is queried that the uplink packet has been forwarded previously, discard the uplink packet; or if it is queried that the uplink packet has not been forwarded previously, determine whether the UPF is a primary UPF, and forward the uplink packet to the primary UPF through an N19 tunnel if the UPF is a secondary UPF, or forward the uplink packet to the DN side if the UPF is a primary UPF.

In one embodiment, the UPF is a primary UPF, and the receiving module 1102 is further configured to receive a downlink packet corresponding to the FRER session; and upon determining that downlink replication is required, execute downlink replication and forward the replicated downlink packet to a secondary UPF via an N19 interface; or upon determining that downlink replication is not required, forward the downlink packet to the FRER session for transmission.

In one embodiment, the UPF is a primary UPF, and the FRER session attribute information element further comprises: N19 tunnel information between the primary UPF and a peer secondary UPF; wherein the primary UPF interworks with the DN side.

In one embodiment, a primary-secondary relationship between the primary UPF and the secondary UPF is determined based on at least one of the following: 1) a pre-configured static manner; 2) a decision made and indicated by the SMF; 3) establishment times of the FRER sessions, wherein the UPF corresponding to the FRER session established earlier serves as the primary UPF, and the UPF corresponding to the FRER session established later serves as the secondary UPF; or 4) a dynamic decision negotiated between the primary UPF and the secondary UPF via an N19 tunnel.

The apparatus provided in the embodiments of the present application can execute the methods described in the foregoing method embodiments and achieve the functions and beneficial effects of the methods described in the foregoing method embodiments, which will not be reiterated here.

FIG. 12 illustrates a schematic diagram of a hardware structure of a communication device for executing the embodiments of the present application. Referring to the figure, at the hardware level, the communication device comprises a processor, and optionally, comprises an internal bus, a network interface, and a memory. The memory may include a volatile memory, such as a highspeed Random-Access Memory (RAM), and may also include a non-volatile memory, such as at least one disk storage device, among others. The communication device may also comprise other hardware required for its operations.

The processor, network interface, and memory may be interconnected via the internal bus. The internal bus may be an Industry Standard Architecture (ISA) bus, a Peripheral Component Interconnect (PCI) bus, an Extended Industry Standard Architecture (EISA) bus, or the like. The bus may be categorized into an address bus, a data bus, a control bus, and so on. For ease of representation, only a bidirectional arrow is used in the figure to indicate the bus, which does not imply that there is only one bus or only one type of bus.

The memory is configured to store programs. Specifically, a program may include program code, wherein the program code comprises computer-operable instructions. The memory may include a volatile memory and a non-volatile memory, and provides instructions and data to the processor.

The processor reads a corresponding computer program from the non-volatile memory into the volatile memory and then executes it, thereby logically forming an apparatus for locating target users. The processor executes the programs stored in the memory and is specifically configured to execute: the methods disclosed in the embodiments shown in FIGs. 1 to 9 and to achieve the functions and beneficial effects of the methods described in the foregoing method embodiments, which will not be reiterated here.

The methods disclosed in the embodiments of the present application, as illustrated in FIGS. 1 to 9 of this application, may be applied to or implemented by a processor. The processor may be an integrated circuit chip with signal processing capabilities. During implementation, the steps of the aforementioned methods may be accomplished through integrated logic circuits of hardware in the processor or through instructions in the form of software. The aforementioned processor may be a general-purpose processor, including a Central Processing Unit (CPU), a Network Processor (NP), etc.; it may also be a Digital Signal Processor (DSP), an Application-Specific Integrated Circuit (ASIC), a Field-Programmable Gate Array (FPGA), or other programmable logic devices, discrete gate or transistor logic devices, or discrete hardware components. The methods, steps, and logic block diagrams disclosed in the embodiments of the present application may be implemented or executed. A general-purpose processor may be a microprocessor, or the processor may be any conventional processor, etc. The steps of the methods disclosed in combination with the embodiments of the present application may be directly embodied as being executed and completed by a hardware decoding processor, or by a combination of hardware and software modules in a decoding processor. Software modules may reside in mature storage media in the field, such as random access memory, flash memory, read-only memory, programmable read-only memory, electrically erasable programmable memory, registers, etc. The storage medium is located in the memory, and the processor reads information from the memory and completes the steps of the aforementioned methods in combination with its hardware.

The communication device may further execute the methods described in the foregoing method embodiments and achieve the functions and beneficial effects of the methods described in the foregoing method embodiments, which will not be reiterated here.

Apart from software implementation, the communication device of the present application does not exclude other implementation methods, such as logic devices or a combination of hardware and software, etc. In other words, an execution subject of the following processing flows is not limited to various logic units, but may also be hardware or logic devices.

The embodiments of the present application further provide a computer-readable storage medium. The computer-readable medium stores one or more programs which, when executed by a communication device comprising a plurality of applications, cause the communication device to execute the methods disclosed in the embodiments shown in FIGs. 1 to 9 and to achieve the functions and beneficial effects of the methods described in the foregoing method embodiments, which will not be reiterated here.

The computer-readable storage medium includes a Read-Only Memory (ROM), a Random Access Memory (RAM), a magnetic disk, or an optical disc, etc.

Furthermore, the embodiments of the present application also provide a computer program product. The computer program product comprises a computer program stored on a non-transitory computer-readable storage medium, the computer program comprising program instructions which, when executed by a computer, implement the following process: the methods disclosed in the embodiments shown in FIGs. 1 to 9 and achieve the functions and beneficial effects of the methods described in the foregoing method embodiments, which will not be reiterated here.

In summary, the above descriptions are merely preferred embodiments of the present application and are not intended to limit the scope of the present application. Any modifications, equivalent substitutions, improvements, etc., made within the concept and principles of the present application shall be included within the scope of the present application.

The systems, apparatuses, modules, or units described in the foregoing embodiments may be implemented by computer chips or entities, or by products having specific functions. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or any combination of these devices.

The computer-readable media include both permanent and non-permanent, removable and non-removable media, which may store information by any method or technology. The information may be computer-readable instructions, data structures, program modules, or other data. Examples of the computer storage media include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassettes, magnetic tape, magnetic disk storage or other magnetic storage devices, or any other non-transitory media that can be used to store information accessible to a computing device. As defined herein, the computer-readable media do not include transitory computer-readable media, such as modulated data signals and carrier waves.

It should also be noted that the terms "comprise", "include", or any other variants thereof are intended to cover non-exclusive inclusion, so that a process, method, article, or device that includes a series of elements includes not only those elements, but also other elements not explicitly listed, or elements inherent to such process, method, article, or device. Without further limitation, an element defined by the phrase "comprising a..." does not preclude the existence of additional identical elements in the process, method, article, or device that includes said element.

The various embodiments in this specification are described in a progressive manner, and identical or similar parts between the embodiments may be referred to each other. Each embodiment focuses on describing the differences from other embodiments. In particular, for system embodiments, since they are substantially similar to method embodiments, the description is relatively simple, and relevant parts may be referred to the descriptions of the method embodiments.

## Claims

1. A session processing method, comprising:
sending, by a session management function called SMF, a session message to a user plane function called UPF;
wherein the session message comprises a frame replication and elimination for reliability called FRER session attribute information element, and the FRER session attribute information element is configured to instruct the UPF to perform at least one of the following on packets corresponding to at least two FRER sessions: downlink replication or uplink elimination; and
an association relationship exists between the at least two FRER sessions.

2. The method according to claim 1, further comprising:
determining, by the SMF, the association relationship between the at least two FRER sessions;
wherein the at least two FRER sessions are established by at least two modules of a same customer premises equipment called CPE, respectively; and
the at least two FRER sessions belong to a same terminal.

3. The method according to claim 2, wherein determining, by the SMF, the association relationship between the at least two FRER sessions comprises at least one of the following:
acquiring, by the SMF, an access and mobility subscription data when acquiring a session subscription data from a unified data management called UDM, wherein the access and mobility subscription data comprises the association relationship between the at least two FRER sessions;
acquiring, by the SMF, a session management subscription data from the UDM, wherein the session management subscription data comprises a first information element, and the first information element comprises the association relationship between the at least two FRER sessions;
acquiring, by the SMF, a session association subscription data from the UDM, wherein the session association subscription data comprises internal group identifier information, and the internal group identifier information comprises the association relationship between the at least two FRER sessions; or
acquiring, by the SMF, subscription permanent identifiers of the at least two modules from a policy control function PCF, and determining the association relationship between the at least two FRER sessions based on the subscription permanent identifiers of the at least two modules.

4. The method according to claim 2, wherein,
the at least two modules access access network devices operating on different frequency bands or employing different access modes respectively.

5. The method according to claim 1, wherein the FRER session attribute information element comprises at least one of the following:
a FrerID, wherein the FrerID is configured to indicate an index of an FRER session; or
a redundancy sequence number called RSN, wherein the RSN is configured to indicate a sequence number of a redundant FRER session.

6. The method according to claim 1, wherein the UPF is a primary UPF, and the FRER session attribute information element further comprises:
N19 tunnel information between the primary UPF and a peer secondary UPF;
wherein the primary UPF interworks with a data network DN side.

7. The method according to claim 6, further comprising:
registering and retrieving, by the SMF, information of the at least two FRER sessions via a UDM or a binding support function called BSF;
wherein at least two SMFs serve a same DN in a load-sharing manner.

8. The method according to claim 7, further comprising:
initiating, by the SMF, a session update request to a peer SMF, wherein the session update request is configured to negotiate establishment of an N19 tunnel between the primary UPF and the secondary UPF.

9. The method according to claim 1, further comprising:
sending, by the SMF via an N40 charging interface, an identifier of a redundant FRER session to a charging function CHF, to enable the CHF to determine a charging policy.

10. A session processing method, comprising:
receiving, by a UPF, a session message from an SMF;
wherein the session message comprises an FRER session attribute information element, and the FRER session attribute information element is configured to instruct the UPF to perform at least one of the following on packets corresponding to at least two FRER sessions: downlink replication or uplink elimination; and
an association relationship exists between the at least two FRER sessions.

11. The method according to claim 10, further comprising:
receiving, by the UPF, an uplink packet corresponding to an FRER session; and
discarding the uplink packet upon it is queried that the uplink packet has been forwarded previously; or
determining whether the UPF is a primary UPF upon it is queried that the uplink packet has not been forwarded previously; and forwarding the uplink packet to the primary UPF through an N19 tunnel in the case that the UPF is a secondary UPF; or forwarding the uplink packet to a DN side in the case that the UPF is a primary UPF.

12. The method according to claim 10, wherein the UPF is a primary UPF, and the method further comprises:
receiving, by the UPF, a downlink packet corresponding to an FRER session; and
executing downlink replication upon determining that downlink replication is required, and forwarding a replicated downlink packet to a secondary UPF via an N19 interface; or
forwarding the downlink packet to the FRER session for transmission upon determining that downlink replication is not required.

13. The method according to claim 10, wherein the UPF is a primary UPF, and the FRER session attribute information element further comprises:
N19 tunnel information between the primary UPF and a peer secondary UPF;
wherein the primary UPF interworks with a data network DN side.

14. The method according to any one of claims 11 to 13, wherein a primary-secondary relationship between the primary UPF and the secondary UPF is determined based on at least one of the following:
a pre-configured static manner;
a decision made and indicated by the SMF;
establishment time of the FRER sessions, wherein a UPF corresponding to the FRER session established earlier serves as the primary UPF, and a UPF corresponding to the FRER session established later serves as the secondary UPF; or
a dynamic decision negotiated between the primary UPF and the secondary UPF via an N19 tunnel.

15. A session processing apparatus, applied to an SMF, comprising:
a sending module, configured to send a session message to a UPF;
wherein the session message comprises an FRER session attribute information element, and the FRER session attribute information element is configured to instruct the UPF to perform at least one of the following on packets corresponding to at least two FRER sessions: downlink replication or uplink elimination; and
an association relationship exists between the at least two FRER sessions.

16. A session processing apparatus, applied to a user plane function UPF, comprising:
a receiving module, configured to receive a session message from an SMF;
wherein the session message comprises a FRER session attribute information element, and the FRER session attribute information element is configured to instruct the UPF to perform at least one of the following on packets corresponding to at least two FRER sessions: downlink replication or uplink elimination; and
an association relationship exists between the at least two FRER sessions.

17. A communication device, comprising:
a processor; and
a memory, configured to store computer-executable instructions;
wherein the computer-executable instructions, when executed, cause the processor to perform the steps of the method according to any one of claims 1 to 14.

18. A computer-readable medium, having one or more programs stored thereon, wherein the one or more programs, when executed by a communication device comprising a plurality of applications, causes the communication device to perform the steps of the method according to any one of claims 1 to 14.
